# EUROPEAN PATENT APPLICATION

(11) **EP 1 148 451 A2**
(43) Date of publication of application: **24.10.2001**
(21) Application number: 01108321.9
(22) Date of filing: 02.04.2001
(51) Int. Cl.: G07F 17/00

(54) **A goods sales system, a goods receiving device and a goods sales method**

(30) Priority: 11.04.2000 JP 2000109794
(71) Applicant: SONY CORPORATION, Tokyo 141 (JP)
(72) Inventor: Ishida, Minoru, Shinagawa-ku, Tokyo (JP)
(74) Representative: Körber, Martin, Dipl.-Phys.

(57) **Abstract**

A user of a station or the like acquires a right to use a box of rental box installed in the station or the like, and key information to open the box is recorded in a key information recording medium.

The purchased goods are stored in the box which the user has a right to use. The user sets the key information recording medium in the rental box when he/she arrives at a station. The box open/close controlling means extracts the key information of the box from the box user information recording means, and checks it with the key information read out from the key information recording medium and judges whether the box is opened or not. In this situation, the box status that the box status monitoring means detected is referred to, if required.
In addition, information necessary for the users, such as presence of the goods in the box, a result of the checking of the key information, or the like is displayed in the display means. When the box open/close controlling means gives approval, the box opens, and the user can receive goods.

## Description

### BACKGROUND OF THE INVENTION

### 1. Field of the Invention

The present invention relates to a goods sales system, a goods receiving device and a goods sales method, in particular, a goods sales system, a goods receiving device and a goods sales method in which a purchase order of goods is received through communication means and the goods are delivered to a recipient in a predetermined manner.

### 2. Description of the Related Art

In late years, a goods sales system in which a user uses an online shopping system or the like so that the user purchases a variety of merchandise at home has been prevalent. An example of such a system is disclosed in Japanese Patent Application Publication Hei 10-162065 which is a basic application of USP 6,085,170.

In such a goods sales system, generally, the user can order merchandise at any time he/she wants for 24 hours a day, using the Internet, personal computer communication, a telephone, a facsimile and the like. On the other hand, with regard to the receipt of the merchandise, a method in which the merchandise is delivered home by mail or a home delivery service is prevalent, and there is a limitation such that the user must be at home at the time of delivery. It is general that the delivery by mail or the home delivery service is done in the daytime. Accordingly, it is extremely inconvenient for the one who is away from home due to business or schoolwork to receive the merchandise in such a manner.

In addition, there is another goods sales system in which the user can receive the ordered merchandise at a convenience store or the like in order to remove such inconvenience owing to a delivery problem.

However, in a conventional goods sales system, there is a problem that convenience of receipt of merchandise is low compared with that of order of the merchandise.

As described above, the receipt of the merchandise delivered by mail or home delivery service is extremely inconvenient for the one who is away from home during the daytime. In addition, the receipt of the merchandise at a convenience store or the like is not always convenient for the user because he/she must go to the convenience store to receive the merchandise. In particular, in a case where there is no such a convenience store around his/her home, or, along his/her daily commuting route, the user must take the trouble to visit the convenience store only for the purpose of receiving the merchandise, which brings inconvenience to the user.

The present invention is made in view of such a point described above, and it is an object of the present invention to provide a goods sales system and a goods receiving device for improving the convenience in receiving the ordered merchandise.

### SUMMARY OF THE INVENTION

According to the present invention, in order to solve the above-mentioned problem, there is provided a goods sales system in which a purchase order of goods is accepted through communication means and the ordered goods are delivered to a recipient in a predetermined manner, said goods sales system comprises: a goods receiving device provided in a vicinity of an entrance of an arbitrary public transport including a station and a bus terminal, said goods receiving device comprising: a box being goods storage means for storing said goods; a key information recording medium in which key information indicating that said recipient is a rightful recipient of the ordered goods and has a right to use a predetermined box in which the ordered goods is stored is recorded; key information reading means for reading the key information with regard to the predetermined box, stored in said key information storage means; box user information recording means for recording box user information containing said key information and information with regard to the box; and box open/close controlling means for checking said key information with regard to the predetermined box, read by said key information reading means and said key information stored in said box user information recording means so as to control open/close of said predetermined box in accordance with a result of the collation.

In a goods sales system of such constitution, key information indicating that the recipient has a right to use the predetermined box in which the ordered goods are stored is preliminarily recorded. The ordered goods are stored in a box of which the rightful recipient has the right to use it among a plurality of boxes of the goods receiving device placed in the vicinity of the entrance of an arbitrary public transport including a station and a bus terminal, and the box having the ordered goods stored therein is closed and locked. When the recipient who wishes to receive the ordered goods sets the key information recording medium in the goods receiving device, the key information reading means of the goods receiving device reads out the key information recorded in the key information recording medium of the recipient and sends the key information to the box open/close controlling means. The box open/close controlling means collates the key information with regard to the box recorded in the box user information recording means with the read out key information so as to decide whether or not the box is to be opened. The box open/close controlling means opens the box when the box is allowed to be opened.

In addition, in order to solve the above-mentioned problem, there is provided a goods receiving device which is used in a system for delivering ordered goods to a recipient in a predetermined manner, said goods receiving device comprising: a box being a goods storage means for storing said ordered goods; key information reading means for reading key information from a key information recording medium in which the key information indicating that said recipient has a right to use a predetermined box in which the ordered goods is stored is recorded; box user information recording means for recording box user information containing said key information and information with regard to the box; box open/close controlling means for checking said key information with regard to the predetermined box, read by said key information reading means and said key information stored in said box user information recording means so as to control open/close of said predetermined box in accordance with a result of the collation, wherein: said goods receiving device is placed in a vicinity of an entrance of an arbitrary public transport including a station or a bus terminal.

In a goods receiving device of such constitution, the ordered goods are stored in the predetermined box of which the recipient has a right to use. In addition, the box user information including the key information of the predetermined box is preliminarily recoded in the box user information recording means. The key information reading means acquires the key information from the key information recording medium of the recipient. The box open/close controlling means checks the readout key information and the corresponding key information of the box recorded in the box user information recording means, and controls the open/close of the box in accordance with a result of the checking.

In addition, in order to solve the above-mentioned problem, there is provided a goods sales method in which a purchase order of goods is accepted through communication means and the ordered goods is delivered to a recipient in a predetermined manner, the method comprising the steps of: recording key information indicating that the recipient of said ordered goods has a right to use a box in which said ordered goods are stored in a key information recording medium, in advance; storing said ordered goods in the box which the recipient has the right to use and provided in a goods receiving device placed in a vicinity of an entrance of an arbitrary public transport including a station and a bus terminal, and locking said box when the purchase order of goods is done through said communication means; and unlocking the box to open the box in a case where said goods receiving device reads out the key information recorded in said key information recording medium and checks the key information with the key information with regard to the box recorded in the goods receiving device in advance to find them coincide.

In a goods sales method of such procedure, the recipient of the ordered goods acquires a right to use a predetermined box provided in the goods receiving device placed in a station or the like in advance, and records the key information indicating that he/she has the right to used the box in the key information recording medium. When certain goods are ordered, the ordered goods are stored in the predetermined box and the box is locked. The goods receiving device reads out the key information recorded in the key information recording medium of the recipient, checks the key information with the preliminarily recorded key information and unlocks the box when the former key information and the latter one coincide.

As described above, in the goods sales system according to the present invention, key information indicating the right to use a predetermined box is recorded in a key information recording medium. A seller of goods, such as the goods sales company stores the ordered goods in the box provided in the goods receiving device installed in a station or a bus terminal and closes the box. When a recipient of the goods sets a key information recording medium in a goods receiving device, key information of a recipient is checked with key information of a corresponding box recorded in the goods receiving device. When the box is allowed to be opened, that is the key information read from the key information recording medium coincides with the key information recorded in the goods receiving device, the box is opened and the recipient can receive the ordered goods.

In this way, since the ordered goods are stored in the goods receiving device installed in a place which is used everyday for commuting and is passed through without fail, such as a station, the recipient can receive the ordered and/or purchased goods at any time convenient to him/her, such as on his/her way home, without disturbing himself/herself by going down to a prescribed place. As a result, convenience in purchasing goods can be improved. In particular, for the people who is away from home by attending office / attending school, convenience of purchasing goods becomes extremely high.

In addition, in the goods receiving device of the present invention, the ordered goods are placed in the appointed box where the recipient of goods has the right to use, and the box is closed. The goods receiving device acquires key information from the key information recording medium of the recipient, and check the key information with key information of the corresponding box, preliminarily stored in the device. When the former key information coincides with the latter, the box is opened. Such goods receiving device is installed in a station, a bus terminal and the like.

In this way, since the ordered and/or purchased goods are stored in the goods receiving box installed in a station or the like, which is used everyday for commuting and the user can receive the goods on his/her way home, convenience in purchasing goods is improved.

In addition, in the goods sales method of the present invention, the recipient of goods acquires a right to use a box of a goods receiving device installed in the station and key information is recorded in the key information recording medium, in advance. The ordered goods are stored in a box. The goods receiving device reads out the key information of the recipient, to check correspondence with the preliminarily stored key information, and in a case where they coincide, unlocks the box.

In this way, since the ordered goods are stored in the goods receiving device installed in a place which is used everyday for commuting and is passed through without fail, such as a station, the recipient can receive the ordered and/or purchased goods at any time convenient to him/her, such as on his/her way home, without disturbing himself/herself by going down to a prescribed place. As a result, convenience in purchasing goods can be improved.

### BRIEF DESCRIPTION OF THE DRAWINGS

Fig 1 is a figure showing the configuration of a goods sales system which is an embodiment of the present invention.

FIG. 2 is a figure explaining the relationship among the goods sales system which is an embodiment of the present invention.

### DESCRIPTION OF THE PREFERRED EMBODIMENTS

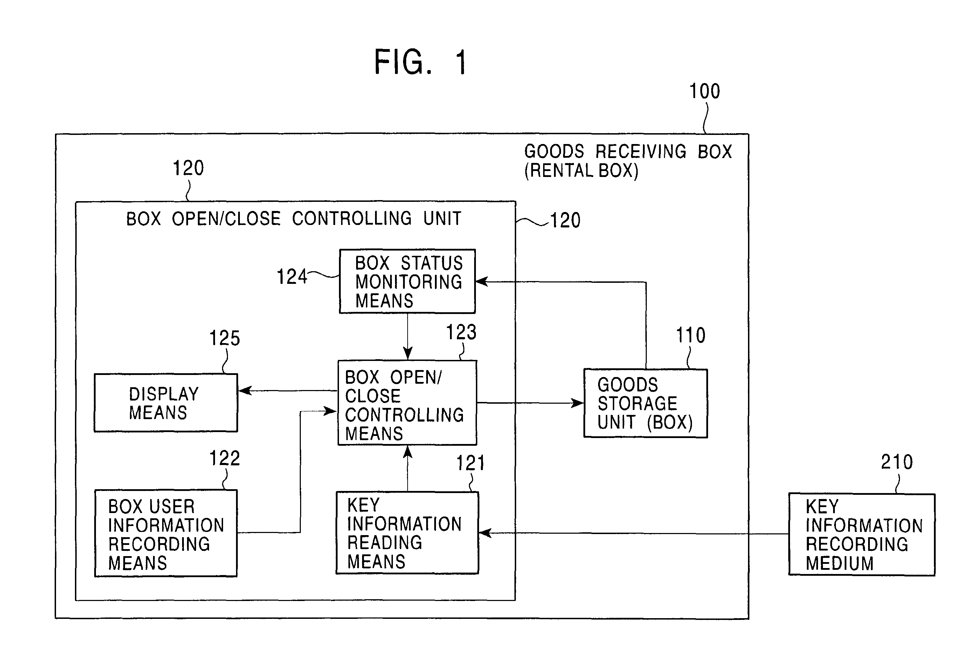

Now, embodiments of the present invention will be described with reference to the drawings. FIG. 1 is a view showing a constitution of a goods sales system being an embodiment of the present invention.

The goods sales system according to the present invention comprises a goods receiving device (hereinafter, referred to as a rental box) 100 installed in the vicinity of an entrance of an arbitrary public transport including a station or a bus terminal, and a key information recording medium 210 in which key information indicating a right of a recipient of goods to use the rental box is recorded.

The rental box 100 is installed in the vicinity of the entrance of the public transport such as a railway, a vehicle, a ship, a plane and the like, for example, in a station yard and a station building, an airport, and comprises a plurality of goods storage units (hereinafter, referred to as boxes) 110, and a box open/close controlling unit 120 for controlling open/close of each of the boxes 110. Furthermore, the box open/close controlling unit 120 comprises key information reading means 121 for reading out the key information from the key information recording medium of the recipient; box user information recording means 122 for recording box user information including the key information of the box 110 and user information thereof; box open/close controlling means 123 for controlling open/close of the box; box status monitoring means 124 for monitoring box status; and display means 125.

A plurality of the boxes 110 are provided in the rental box 100, and a transportation company which manages the rental box 100 rents out each of the boxes to a user of the transportation or the like. When the user is allowed to rent the box, key information to open and close the box 110 is recorded in key information recording medium 210 of the user. In addition, a goods sales company which sells the goods makes a contract with the transportation company, and a right to use some of the boxes is sold at an appropriate rental fee.

The box open/close controlling unit 120 manages the boxes 110 and controls open/close of the boxes. The key information reading means 121 reads the key information recorded in the key information recording medium 210 which the user has, and sends the key information to the box open/close controlling means 123.

The box user information recording means 122 records box user information related to the boxes 110, including key information for each of the boxes 110, information concerning the user to whom the key information is provided, information concerning the goods sales company which is capable of using some of the boxes 110, and the like. The box user information can be read out by the box open/close controlling means 123.

The box open/close controlling means 123 acquires the key information of the user from key information reading means 121, extracts the box user information of the corresponding box from the box user information recording means 122 and checks the information. Furthermore, if necessary, in view of the status of the box 110 obtained by the box status monitoring means 124, the box open/close controlling means 120 controls the open/close of the box 110. For example, in a case where the key information of the user and the corresponding information coincide, the box 110 is opened. In this case, necessary information such as presence or absence of the goods in the box 110, the result of the checking or the like is provided to the user through the display means 125.

The box status monitoring means 124 monitors the status of the box 110, for example, whether or not goods are stored in the box, and information concerning the status of the box is sent to the box open/close controlling means 123.

The display means 125 informs the user of predetermined information according to the box open/close controlling means 123. The key information recording medium 210 is a recording medium in which key information used by the user allowed to use the box 110 to open the box 110 is recorded. The key information recording medium 210 is a portable one such as a magnetic card, an IC card or the like, and it can also be used as a prepaid ticket for a public transport, such as a season ticket or a commuter pass, for example. The transportation company has a user who wants to buy a commuter pass select whether or not he/she uses a box 110 of the rental box 100, and, in a case where he/she selects to use the box 110, a commuter pass in which the available rental period, and a number or a code used as a key is recorded is issued for him/her. It is more convenient if available one of the boxes 110 to be rented is displayed on the commuter pass.

Next, the operation of the goods sales system having such a configuration will be described. Passengers or any other user of the stations or the like acquires a right to use a box 110 of the rental box 100 installed in the stations or the like, as occasion arises. When a user of a station acquires the right to use a box 110, key information to open out to box 110 is given to him/her, and the key information is recorded in the key information recording medium 210 also used as a ticket. When the user purchases goods, the goods are stored in the box 110 which the user has the right to use. When the user arrives at the station on his/her way home or any other situation, the user sets his/her key information recording medium 210 at a prescribed position of the rental box 100. In the box open/close controlling unit 120, the key information reading means 121 reads the key information recorded in the key information recording medium 210 and sends it to the box open/close controlling means 123. The box open/close controlling means 123 extracts the key information of the box 110 from the box user information recording means 122, and checks it with the key information read out from the key information recording medium 210 and judges whether the box is opened or not. In this situation, the box status that the box status monitoring means 124 detected is referred to, if required. In addition, information necessary for the users, such as presence of the goods in the box 110, a result of the checking of the key information, or the like is displayed in the display means 125. When the box open/close controlling means 123 gives approval, the box opens, and the user can receive goods.

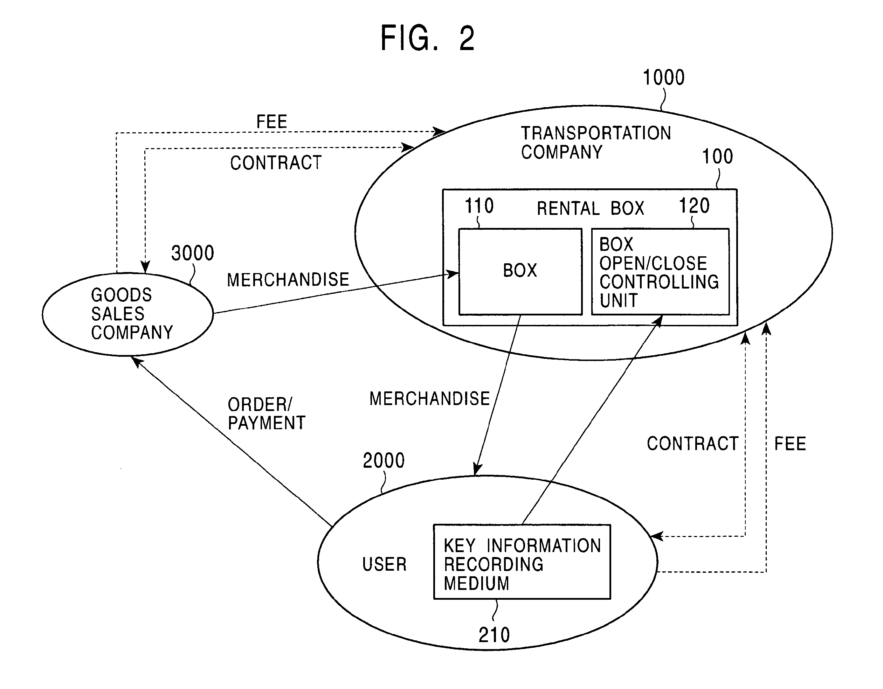

Next, the entire goods sale method will be explained. FIG. 2 is a figure explaining the relationship among the goods sales system which is an embodiment of the present invention. Items identical to those shown in Fig. 1 have the same reference numerals and the explanation thereof is omitted from the description.

The transportation company 1000 offers means of transportation and installs and manages the rental box 100 in the stations. It is possible for a user 2000 to use the means of transportation offered by the transportation company 1000 and to rent the box 110 of the rental box 100, if necessary. A goods sales company 3000 sells goods and delivers goods sold to the user 2000, by way of the predetermined box 110, to the user 2000.

The goods sales method in such a goods sales system will now be explained. The transportation company 1000 installs a rental box 100 in a station or the like, and makes a contract with the goods sales company 3000 to sell a box 110 of the rental box 100 at an appropriate rate to the goods sales company 3000. When the contract between the transportation company 1000 and the goods sales company 3000 is completed, rental fee is paid from the goods sale company 3000 to the transportation company 1000, as occasion arises. Furthermore, when the user 2000 purchases a prepaid-type ticket, such as a season ticket or a commuter pass, the transportation company 1000 has the user who purchases the ticket select whether or not he/she uses the rental box 100. At this time, a list and the like of available goods sales companies 3000 is shown, and the user 2000 can determine whether he/she uses the rental box 100 in reference to the list. When the user 2000 selects the use of the rental box 100, a key information recording medium 210 in which a validity period and a number or a code used as a key are recorded is sold to the user 2000. In this way, a contract between the transportation company 1000 and the user 2000 is completed, and then, rental fee is paid from the user 2000 to the transportation company 1000, as occasion arises. The rental fee of the rental box 100 is paid by the goods sales company 3000, or the user 2000, or both the goods sales company 3000 and the user 2000 at an appropriate ratio.

The user 2000 who rented a predetermined box 110 of the rental box 100 sends an order to the goods sales company 3000 using communication means such as a personal computer, a telephone, a facsimile and the like. Settlement is made in a method specified by the goods sales company 3000 or in a method selected by the user 2000. The goods sales company 3000 stores the ordered goods in the box 110 which the user 2000 rents by an appointed time.

The user 2000 sets the key information recording medium 210 in the box open/close controlling unit 120 to be read by the box open/close controlling unit 120 so as to open the box 110, and the user 2000 receives the goods he/she ordered, on his/her way home or any other situation.

The processing function mentioned above can be realized with a computer. In such a case, the contents of the processing function to be included in the goods sales system and the goods receiving device are to be describe in a program recorded in a recording medium readable by a computer. A computer realizes the above mentioned processing by executing the program in the computer. A magnetic recording device, a semiconductor memory and the like are examples of the computer-readable recording medium. In a case of distributing such a program, the program may be stored in a portable-type recording medium, such as a CD-ROM (Compact Disc Read Only Memory) or a floppy disk, or the program may be stored in a memory of a computer connected via a network so as to transfer the program to another computer through the network. In executing the program in a computer, the program is stored in a hard disk device or the like of the computer and is loaded in a main memory to be executed.

## Claims

1. A goods sales system which accepts a purchase order of goods through a communications means, and sends the ordered goods to a recipient with a predetermined method, comprising:
a key information recording medium in which key information indicating that said recipient is a rightful recipient of the ordered goods and has a right to use a predetermined box in which the ordered goods is stored is recorded;
a box being goods storage means for storing said goods;
key information reading means for reading the key information with regard to the predetermined box, stored in said key information storage means;
box user information recording means for recording box user information containing said key information and information with regard to the box;
box open/close controlling means for checking said key information with regard to the predetermined box, read by said key information reading means and said key information stored in said box user information recording means so as to control open/close of said predetermined box in accordance with a result of the collation, wherein:
said goods receiving device is placed in a vicinity of an entrance of an arbitrary public transport including a station or a bus terminal.

2. The goods sales system according to Claim 1, wherein said key information recording medium is also used as a prepaid-type ticket of said public transport.

3. A goods receiving device which is used in a system for delivering ordered goods to a recipient in a predetermined method, comprising:
a box being a goods storage means for storing said ordered goods;
key information reading means for reading key information from a key information recording medium in which the key information indicating that said recipient has a right to use a predetermined box in which the ordered goods is stored is recorded;
box user information recording means for recording box user information containing said key information and information with regard to the box;
box open/close controlling means for checking said key information with regard to the predetermined box, read by said key information reading means and said key information stored in said box user information recording means so as to control open/close of said predetermined box in accordance with a result of the collation, wherein:
said goods receiving device is installed in a vicinity of an entrance of an arbitrary public transport including a station or a bus terminal.

4. A goods sales method in which a purchase order of goods is accepted through a communications means, and ordered goods is sent to a recipient with a predetermined method, comprising the steps of:
recording key information indicating that the recipient of said ordered goods has a right to use a box in which said ordered goods are stored in a key information recording medium, in advance;
storing said ordered goods in the box which the recipient has the right to use and provided in a goods receiving device placed in a vicinity of an entrance of an arbitrary public transport including a station and a bus terminal, and locking said box when the purchase order of goods is done through said communication means; and
unlocking the box to open the box in a case where said goods receiving device reads out the key information recorded in said key information recording medium and checks the key information with the key information with regard to the box recorded in the goods receiving device in advance to find both information coincide.
